# EUROPEAN PATENT SPECIFICATION

(11) **EP 3 989 678 B1**
(45) Date of publication and mention of the grant of the patent: **07.12.2022**
(21) Application number: 21206927.2
(22) Date of filing: 18.02.2020
(51) Int. Cl.: H05B 6/06, H05B 6/12

(54) **WIRELESS INDUCTION HEATING COOKER AND WIRELESS INDUCTION HEATING SYSTEM COMPRISING THE SAME**
KOCHER MIT DRAHTLOSER INDUKTIONSERWÄRMUNG UND SYSTEM MIT DRAHTLOSER INDUKTIONSERWÄRMUNG DAMIT
APPAREIL DE CUISSON À CHAUFFAGE PAR INDUCTION SANS FIL ET SYSTÈME DE CHAUFFAGE PAR INDUCTION SANS FIL LE COMPRENANT

(30) Priority: 20.02.2019 KR 20190020142; 19.11.2019 KR 20190148580
(43) Date of publication of application: 27.04.2022
(62) Divisional of application: 20157846.5
(73) Proprietor: LG Electronics Inc., Seoul 07336 (KR)
(72) Inventor: KIM, Wan Soo, 08592 Seoul (KR); NAM, Hyeunsik, 08592 Seoul (KR); PARK, Byungkyu, 08592 Seoul (KR); KIM, Yangkyeong, 08592 Seoul (KR)
(74) Representative: Vossius & Partner Patentanwälte Rechtsanwälte mbB

(56) References cited:
- EP-A1- 3 223 386
- EP-A2- 2 453 715
- WO-A1-2015/062947
- WO-A1-2019/012643
- DE-A1-102010 020 189

## Description

### BACKGROUND

### 1. Field of the Invention

The present disclosure relates to a wireless induction heating system including an induction heating device and a wireless induction heating cooker performing mutual data communication for optimal displacement to perform heat transfer.

### 2. Description of Related Art

A device of the prior art is described in EP2453 715. Various types of cooking devices may use a wireless induction heating method. In the cooker market, research is being conducted on heating food based on a magnetic field generated by an induction heating device, rather than generating heat by itself to heat the food.

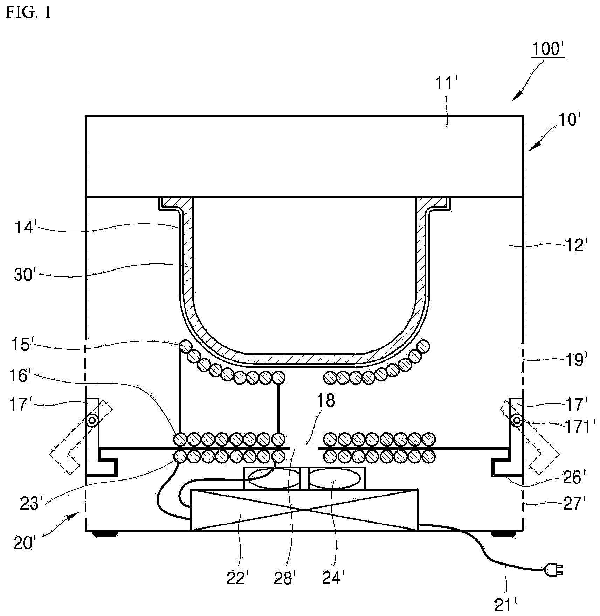

Japanese Patent No. 5943770 (hereinafter; referred to as "a related art document") discloses an electric cooker that heats food through an induction heating method. The electric cooker disclosed in the related art document is described below in detail with reference to FIG. 1.

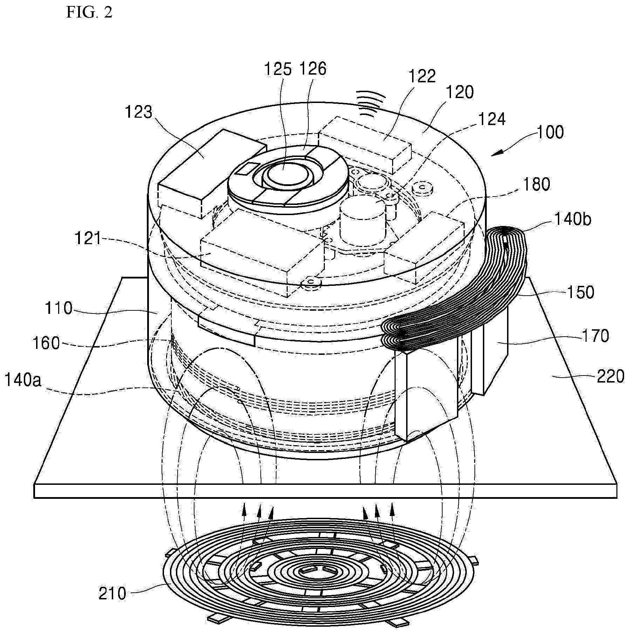

FIG.1 is a side cross-sectional view showing an electric cooker in related art. FIG. 1 is extracted from a diagram (e.g., FIG. 2) of the related art document and shows an example electric cooker 100' disclosed in the related art document. In some examples, reference numerals shown in FIG. 1 may be partially different from reference numerals described in the related art document.

Referring to FIG. 1, an electric cooker 100' in related art may include an inner pot 30'accommodated in an inner pot accommodator 14' and an induction heating coil 15' that heats the inner pot 30' at a lower portion of the inner pot accommodator 14'. A heating power receiving coil 16' is provided on a bottom surface of a body 12' of a rice cooker 10' to receive, from a power supply 20', the power supplied to the induction heating coil 15'.

According to the related art document having the above-described structure, the induction current may be generated by the heating power receiving coil 16' based on the magnetic field generated by the heating power supply coil 23'provided in the power supply 20'. In some examples, induction current may be generated in the induction heating coil 15' based on the magnetic field generated by the heating power receiving coil 16' and an inner pot 30' is heated based on the induction current generated by the induction heating coil 15'.

However, according to the above-mentioned related art document, a primary power transmitting process between the heating power supply coil 23'and the heating power receiving coil 16' to heat the inner pot 30' and a secondary power transmitting process between the heating power receiving coil 16' and the induction heating coil 15' may be desired, to thereby cause power (or heat) loss during two power transmitting processes.

In some examples, various types of electronic devices may be built in the cooker 100' and the related art document discloses only content of heating the inner pot 30' based on the magnetic field generated by the power supply coil 23' and does not disclose wirelessly receiving the power from the power supply 20' that drives the various types of electronic devices built in the electric cooker 100'.

### SUMMARY OF THE INVENTION

The present disclosure provides a wireless induction heating system capable of determining whether a wireless induction heating cooker is normally disposed on an induction heating device.

The present disclosure further provides a wireless induction heating system that informs users that the wireless induction heating cooker is abnormally disposed on the induction heating device.

The present disclosure also provides a wireless induction heating system that controls an amount of transferred heat for the wireless induction heating cooker based on mutual displacement between the wireless induction heating cooker and the induction heating device.

The objects of the present disclosure are not limited to the above-mentioned objects, and other objects and advantages of the present disclosure which are not mentioned can be understood by the following description and more clearly understood by the embodiments of the present disclosure. It will also be readily apparent that the objects and the advantages of the present disclosure can be implemented by features described in claims and a combination thereof.

According to the present disclosure, the wireless induction heating system may detect the amount of changed current of the heating coil of the induction heating device and may determine whether the wireless induction heating cooker is normally disposed on the induction heating device.

In some examples, according to the present disclosure, the wireless induction heating system may output abnormality information through at least one of the wireless induction heating cooker and the induction heating device based on the wireless induction heating cooker being abnormally disposed to thereby inform a user of the abnormally disposed wireless induction heating cooker and induction heating device.

In some examples, according to the present disclosure, the wireless induction heating system may control output of the heating coil based on a displacement state of the wireless induction heating cooker to control an amount of transferred heat with respect to the wireless induction heating inner pot based on mutual displacement between the wireless induction heating cooker and the induction heating device.

According to the present disclosure, the wireless induction heating system may determine whether the wireless induction heating cooker is normally disposed on the induction heating device to thereby determine poor displacement of the wireless induction heating cooker, which may cause degraded rice-cooking performance, without user's recognition.

In some examples, according to the present disclosure, the wireless induction heating system may notify the user of the abnormally disposed wireless induction heating cooker on the induction heating device, to thereby induce the user to normally dispose the wireless induction heating cooker on the induction heating device and prevent degradation in the rice-cooking performance caused by the poor displacement of the wireless induction heating cooker.

In some examples, according to the present disclosure, the wireless induction heating system may control the amount of transferred heat for the wireless induction heating cooker based on the mutual displacement between the wireless induction heating cooker and the induction heating device, to thereby prevent safety problems that may occur due to the poor displacement of the wireless induction heating cooker.

A specific effect of the present disclosure, further to the above-mentioned effect, is described together while describing specific matters to implement the present disclosure.

### BRIEF DESCRIPTION OF THE DRAWINGS

FIG. 1 is a side cross-sectional view showing an electric cooker in related art.
FIG. 2 shows an example wireless induction heating cooker operating on an induction heating device.
FIG. 3 is a side cross-sectional view showing the wireless induction heating cooker shown in FIG. 2.
FIGS. 4A and 4B respectively show example displacement of a first power receiving coil.
FIG. 5 is an enlarged view showing a power transmitting coil and a second power receiving coil shown in FIG. 2.
FIG. 6 shows a control flow of a wireless induction heating cooker operating on an induction heating device.
FIG. 7 shows an example wireless induction heating system.
FIG. 8 shows a control flow of the wireless induction heating system shown in FIG. 7.
FIG. 9 is a flow chart showing operation of an induction heating device.
FIG. 10 is a flow chart showing operation of a wireless induction heating cooker.

### DETAILED DESCRIPTION OF EXEMPLARY EMBODIMENTS

The above-mentioned objects, features, and advantages of the present disclosure are described in detail with reference to the accompanying drawings. Accordingly, the skilled person in the art to which the present disclosure pertains may easily implement the technical idea of the present disclosure. In the description of the present disclosure, if it is determined that a detailed description of a well-known relevant technology of the present disclosure may unnecessarily obscure the gist of the present disclosure, the detailed description thereof is omitted. One or more embodiments of the present disclosure are described in detail with reference to the accompanying drawings. In the drawings, same reference numerals are used to refer to same or similar components.

Hereinafter, when any component is arranged at "an upper portion (or a lower portion)" of the component or "on (or under") of the component, any component may be arranged in contact with an upper surface (or a lower surface) of the component, and another component may be interposed between the component and any component arranged on (or under) the component.

Further, when one component is described as being "connected", "coupled", or "connected" to another component, the component may be directly connected or able to be connected to the other component; however, it is also to be understood that an additional component may be "interposed" between the two components, or the two components may be "connected", "coupled" or "connected" through an additional component.

The present disclosure relates to a wireless induction heating system including an induction heating device and a wireless induction heating cooker that perform mutual data communication for optimal displacement to perform heat transfer.

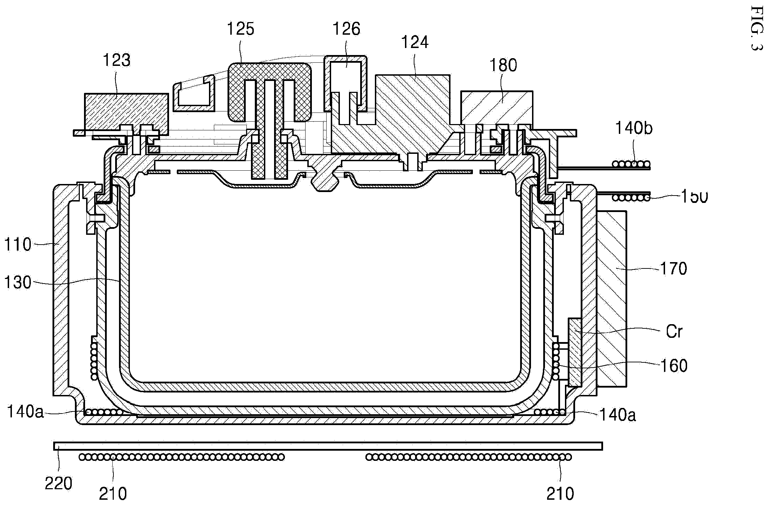

The wireless induction heating cooker used for the present disclosure is described in detail with reference to FIGS. 2 to 6. FIG. 2 shows an example wireless induction heating cooker operating on an induction heating device. FIG. 3 is a side cross-sectional view showing the wireless induction heating cooker shown in FIG. 2.

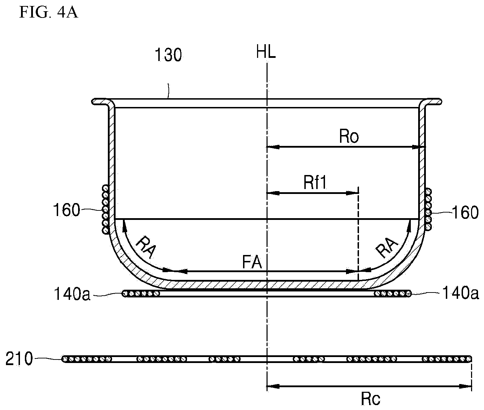

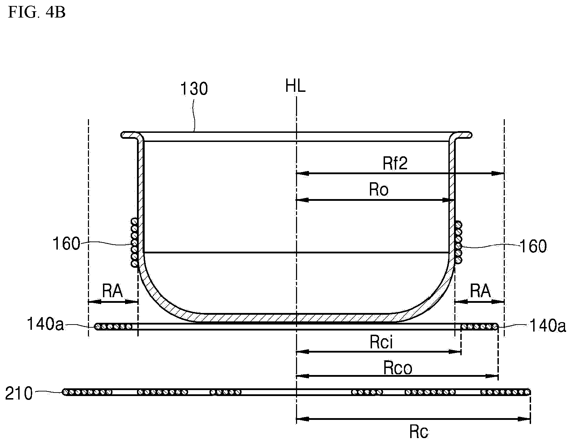

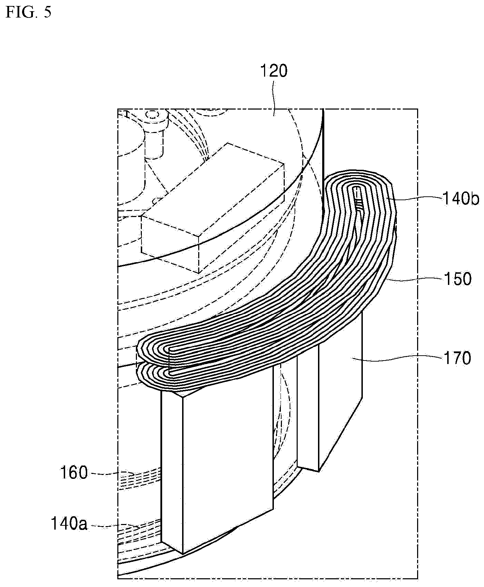

FIGS. 4A and 4B respectively show example displacement of a first power receiving coil. FIG. 5 is an enlarged view showing a power transmitting coil and a second power receiving coil shown in FIG. 2.

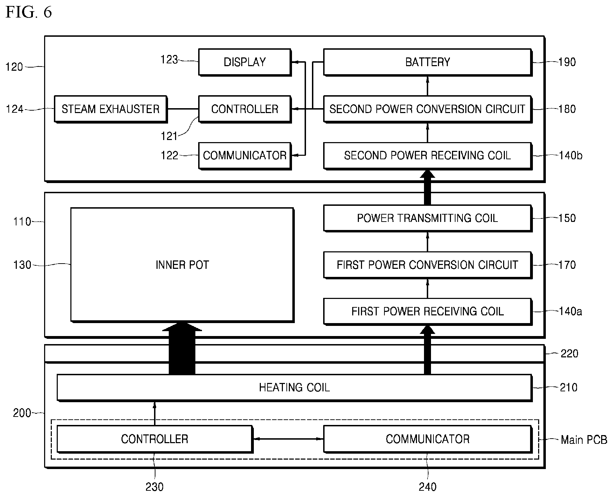

FIG. 6 shows control flow of a wireless induction heating cooker operating on an induction heating device.

The wireless induction heating cooker used for the present disclosure may be disposed on the induction heating device and may perform cooking operation based on a magnetic field generated by the heating coil of the induction heating device.

Referring to FIGS. 2 and 3, according to an embodiment of the present disclosure, the wireless induction heating cooker 100 includes a main body 110, a lid 120, an inner pot 130, and a first power receiving coil 140a, a power transmitting coil 150, a side heating coil 160, and a second power receiving coil 140b, and the lid 120 includes a controller 121, a communicator 122, and a display 123, a steam exhauster 124, a pressure weight 125, and a noise reducer 126.

The wireless induction heating cooker 100 shown in FIGS. 2 and 3 is according to one embodiment, components of the wireless induction heating cooker 100 are not limited to examples shown in FIGS. 2 and 3, and some components of the wireless induction heating cooker 100 may be added, changed or deleted as necessary.

According to the present disclosure, the wireless induction heating cooker 100 may operate on any induction heating device that heats an object through electromagnetic induction.

As shown in FIG. 2 and FIG. 3, the wireless induction heating cooker 100 may operate while being placed on a top plate 220 of any induction heating device including the heating coil 210. In some examples, the wireless induction heating cooker 100 may operate while being placed on the top plate 220 on a vertical line of the heating coil 210.

Current may flow through the heating coil 210 under the control of the main printed circuit board (PCB) of the induction heating device, and thus, a magnetic field may be generated by the heating coil 210. The magnetic field generated by the heating coil 210 may induce current in the inner pot 130 and the first power receiving coil 140a described below.

The main body 110 may be a case that supports a lower portion and a side portion of the wireless induction heating cooker 100, for example, may have a cylindrical shape with an open top. Cooking may be performed inside the main body 110. In some examples, the inner pot 130 described below is accommodated in the main body 110 and various types of grains such as rice may be heated and cooked in the inner pot 1.

The lid 120 is a case that seals an upper portion of the wireless induction heating cooker 100 and may be fastened to an upper surface of the main body 110. At this time, the lid 120 may be fastened to the main body 110 to be opened and closed with respect to the upper surface of the main body 110.

In one example, the lid 120 may be coupled to the main body 110 using a hinge to be selectively opened and closed. In some examples, the lid 120 is coupled to a hinge shaft provided on the upper surface of the main body 110, and may be selectively opened and closed with respect to the upper surface of the main body 110 by rotating about the hinge shaft.

In another example, the lid 120 may be detachable from the main body 110. In some examples, the lid 120 may be coupled to the upper surface of the main body 110 by a fastening member provided in plurality at an upper edge of the main body 110. In this case, as the lid 120 is completely separated from the main body 110, a cleaning performance of the lid 120 may be improved.

In some examples, as shown in FIGS. 2 and 3, the lid 120 may include at least one electronic device. For example, the lid 120 includes a controller 121 that controls overall operation of the wireless induction heating cooker 100, a communicator 122 that performs data communication with the above-mentioned induction heating device, and a display 123 that visually outputs state information related to the wireless induction heating cooker 100. In some examples, although not shown in the figures, the lid 120 may further include a battery that supplies power to the above-mentioned controller 121, communicator 122, and display 123.

The controller 121, the communicator 122, and the display may be implemented with a printed circuit board (PCB) including a plurality of integrated circuits (ICs).

In some examples, the lid 120 may include a pressure weight 125 that maintains a constant internal pressure of the wireless induction heating cooker 100, and a noise reducer 124 including a sound absorbing member to reduce noise during exhaust of steam. In some examples, the lid 120 may include a steam exhauster 124 (e.g., a solenoid valve) that exhausts the internal steam of the wireless induction heating cooker 100 to outside based on a specific control signal, for example, a control signal output by the controller 121.

The inner pot 130 may be accommodated in the main body 110 and heated based on a magnetic field generated by the heating coil 210 of the induction heating device. The inner pot 130 may have a shape corresponding to an inner storage space of the main body 110. For example, in some cases where the main body 110 has a cylindrical shape, the inner pot 130 may also have a cylindrical shape with an open upper surface.

Based on the wireless induction heating cooker 100 being placed on the induction heating device, the lower surface of the inner pot 130 and the heating coil 210 may be opposed to each other and the bottom surface of the main body 110 may be provided between the lower surface of the inner pot 130 and the heating coil 210. Based on current flowing through the heating coil 210, the magnetic field generated by the heating coil 210 may induce current in the inner pot 130, and Joule's heat may be generated in the inner pot 130 based on the induced current.

In order to generate the induced current, the inner pot 130 may be made of magnetic material. For example, the inner pot 130 may be made of a cast iron containing iron (Fe) and may also be made of a clad in which iron (Fe), aluminum (Al), stainless steel, and the like, are bonded.

In some examples, a width of the bottom surface of the inner pot 130 may be narrower than a width of the heating coil 210. In other words, when the heating coil 210 is a circular plate coil and the inner pot 130 has a cylindrical shape, a radius of the bottom surface of the circular inner pot 130 may be less than a coil radius (Rc), which is a distance between a center of the heating coil 210 and an outer circumferential surface of the heating coil 210. In some cases where the width of the bottom surface of the inner pot 130 is narrower than the width of the heating coil 210, all of the magnetic fields generated by the heating coil 210 may be transmitted onto the bottom surface of the inner pot 130 without leakage in an area where the inner pot 130 is disposed.

The first power receiving coil 140a may be provided on the bottom surface of the main body 110, and current may be induced in the first power receiving coil 140a based on a magnetic field generated by the heating coil 210.

The first power receiving coil 140a may have a ring shape having a predetermined inner diameter and outer diameter and may be provided at any position of the bottom surface of the main body 110. However, in order to maximize a heating efficiency of the inner pot 130 due to an electromagnetic induction phenomenon, it is desirable that the first power receiving coil 140a is disposed in parallel with the heating coil 210 at the lower portion of an edge region of the inner pot 130.

The edge region may be a region defined in a radial direction with respect to a center vertical line of the inner pot 130, and may be an area adjacent to a cylindrical surface of the inner pot 130. In other words, the edge region may be adjacent to a circumference of the inner pot 130 when the inner pot 130 is viewed from the top. The edge region of the inner pot 130 is described below in detail with reference to FIGS. 4A and 4B.

Referring to FIG. 4A, the bottom surface of the inner pot 130 may include a plate area FA parallel to the heating coil 210 and an edge area RA connecting the plate area FA and a side surface of the inner pot 130.

A corner (hereinafter, the rounding portion RA) of the bottom surface of the inner pot 130 may be rounded to facilitate taking out of the food after completion of cooking of the food. Accordingly, the bottom surface of the inner pot 130 may include a plate panel area FA that is flat and in parallel with the heating coil 210 and a rounding portion RA rounded to connect the bottom surface of the inner pot 130 and the side surface of the inner pot 130.

In one example, the edge area RA of the inner pot 130 may be a rounding portion RA, as shown in FIG. 4A. Accordingly, the first power receiving coil 140a may be disposed in the horizontal direction below the edge area RA of the inner pot 130, that is, below the rounding portion RA

In more detail, the plate area FA of the bottom surface of the inner pot 130 may be formed within a first reference radius Rf1 with respect to the center vertical line HL of the inner pot 130, and the edge area RA of the inner pot 130 may be formed between the first reference radius Rf1 and the outer diameter Ro of the inner pot 130.

Through this structure, the first power receiving coil 140a may be disposed between the first reference radius Rf1 and the outer diameter Ro of the inner pot 130. In other words, a horizontal displacement range of the first power receiving coil 140a may be a range between the first reference radius Rf1 and the outer diameter Ro of the inner pot 130.

Referring back to FIG. 4A, based on a distance between the edge area RA and the heating coil 210 being greater than a distance between the plate area FA and the heating coil 210, the amount of transferred heat caused by the magnetic field generated by the heating coil 210 may be relatively less in the edge area RA than the plate area FA. The first power receiving coil 140a is disposed below the edge area RA having the relatively less amount of transferred heat to thereby receive the power from the heating coil 210 without significantly reducing a total amount of transferred heat with respect to the inner pot 130.

In some examples, referring to FIG. 4B, the edge area RA of the inner pot 130 may be vertically formed outside the inner pot 130. In some examples, the edge area RA of the inner pot 130 may be formed between the outer diameter Ro of the inner pot 130 and the second reference radius Rf2

Accordingly, the first power receiving coil 140a may be vertically disposed outside the inner pot 130. In other words, the first power receiving coil 140a may have an inner diameter Rci of the first power receiving coil 140a greater than an outer diameter Ro of the inner pot 130 and may be disposed under the inner pot 130.

However, in order to efficiently generate induced current in the first power receiving coil 140a, the outer diameter Rco of the first power receiving coil 140a may be less than the coil radius Rc of the heating coil 210.

In other words, as shown in FIG. 4B, the inner diameter Rci of the first power receiving coil 140a is greater than the outer diameter Ro of the inner pot 130, and the outer diameter Rco of the first power receiving coil 140a is less than the coil radius Rco the heating coil 210, and thus, an area formed by the first power receiving coil 140a may all be vertically included in the area formed by the heating coil 210. Accordingly, in the example shown in FIG. 4B, the magnetic field generated by the heating coil 210 may be transmitted to the first power receiving coil 140a without leakage in the area where the first power receiving coil 140a is disposed.

The first power receiving coil 140a is disposed under the edge area where vertical heat conduction to the inner pot 130 does not occur, and thus, the first power receiving coil 140a may receive the power from the heating coil 210 without degrading the amount of transferred heat with respect to the inner pot 130.

According to the present disclosure, the wireless induction heating cooker uses the magnetic field generated in the region of low heat transfer efficiency with respect to the inner pot as a power source of an internal electronic device, to thereby efficiently use the power supplied wirelessly from the induction heating device for the cooking operation.

In some examples, a side heating coil 160 is vertically disposed on the outer circumferential surface of the inner pot 130 and is connected to the first power receiving coil 140a to heat the inner pot 130based on the current induced in the first power receiving coil 140a.

Referring back to FIGS. 2 and 3, the side heating coil 160 may be wound along the outer circumferential surface of the inner pot 130 and may be in close contact with the outer circumferential surface of the inner pot 130. In some cases where an inner pot support member is provided in the main body 110 to support the inner pot 130, and the inner pot support member supports the outer circumferential surface of the inner pot 130 as well as the bottom surface of the inner pot 130, the side heating coil 160 may be disposed on the inner pot support member.

The side heating coil 160 may be vertically disposed. In some examples, the side heating coil 160 includes a plurality of layers corresponding to a number of turns thereof, and layers of the side heating coil 160 may be vertically disposed side by side along the outer circumferential surface of the inner pot 130.

The side heating coil 160 may be electrically connected to the first power receiving coil 140a. In other words, a first end of the side heating coil 160 may be connected to a first end of the first power receiving coil 140a. As a result, the first power receiving coil 140a and the side heating coil 160 may include a single metal wire and the first power receiving coil 140a and the side heating coil 160 may be distinguished from each other according to positions and functions of the first power receiving coil 140a and the side heating coil 160.

As the side heating coil 160 is electrically connected to the first power receiving coil 140a, current induced in the first power receiving coil 140a may flow through the side heating coil 160. Based on the current flowing through the side heating coil 160, a magnetic field may be generated in the side heating coil 160, and the magnetic field generated in the side heating coil 160 induces the current in the outer circumferential surface of the inner pot 130, to thereby heat the inner pot 130, specifically, a side surface of the inner pot 130.

As the first power receiving coil 140a is disposed below the edge area RA where the less amount of heat is transferred by the heating coil or vertical heat transfer may not occur, to provide the current induced by the heating coil 210 to the side heating coil 160 while not degrading the total heat generation amount with respect to the inner pot 130.

In some examples, a number of turns of the side heating coil 160 may be greater than a number of turns of the first power receiving coil 140a to improve the efficiency of the heating operation.

As described with reference to FIGS. 4A and 4B, the first power receiving coil 140a generates induction current while minimizing a decrease in the amount of generated heat with respect to the inner pot 130, and transmits the generated induced current to the side heating coil 160. In some examples, the side heating coil 160 is provided to heat the outer circumferential surface of the inner pot 130 in a wide range.

In order to achieve this purpose, the first power receiving coil 140a may have a relatively narrow horizontal width in order to minimize a decrease in heat generation with respect to the inner pot 130, and the side heating coil 160 may have a relatively greater vertical width to surround the outer circumferential surface of the inner pot 130 in a wide range.

Based on the thicknesses of the metal wire of the first power receiving coil 140a being same as the side heating coil 160, a horizontal width and a vertical width of the coils 140a and 160 may be proportional to a number of turns of the coils 140 and 160, respectively. Accordingly, the number of turns of the first power receiving coil 140a may be relatively less than the number of turns of the side heating coil 160.

According to the present disclosure, the bottom surface of the inner pot as well as the side of the inner pot may be heated based on the magnetic field generated by the heating coil to define a plurality of heat transfer paths based on a single heat source and to provide temperature uniformity of the inner pot.

In some examples, based on the above-mentioned first power receiving coil 140a and the side heating coil 160 are applied to the inner pot 130, overall impedance value (|Z|) of the wireless induction heating cooker 100 may be a composite impedance value between an impedance value of the inner pot 130 and impedance values of the first power receiving coil 140a and the side heating coil 160.

Accordingly, based on the first power receiving coil 140a and the side heating coil 160 being used for the inner pot 130, the overall impedance value (|Z|) of the wireless induction heating cooker 100 is reduced, and output transmitted toward the inner pot 130 from the heating coil 210 may also be reduced due to the reduction in the overall impedance value (|Z|).

In order to prevent such output reduction, a second end of the first power receiving coil 140a and a second end of the side heating coil 160 may be electrically connected to each other through a resonance capacitor Cr.

The first power receiving coil 140a, the side heating coil 160, and the resonance capacitor Cr may form an LC resonance circuit, and the firned LC resonance circuit may be magnetically coupled to the heating coil 210 based on a resonance frequency. In this case, as the overall impedance value (|Z|) of the wireless induction heating cooker 100 becomes a maximum impedance level, a maximum level of the output transmitted from the heating coil 210 toward the inner pot 130 may also be provided.

The power transmitting coil 150 may be provided at a side of the upper portion of the main body 110 to receive the current induced in the first power receiving coil 140a to generate the magnetic field.

Referring back to FIG. 3, the power transmitting coil 150 may be supported by any support member and fixedly disposed at a side of an upper portion of the main body 110. The power transmitting coil 150 may be disposed in close contact with the side of the main body 110 to minimize the volume of the wireless induction heating cooker 100.

In some examples, the power transmitting coil 150 may have a plate shape, and may be horizontally disposed at the side of the main body 110 to face the second power receiving coil 140b described below. That is, the power transmitting coil 150 may vertically protrude from the side of the main body 110.

For example, the power transmitting coil 150 may be disposed along the outer surface of the main body 110 at the side of the upper portion of the body 110.

Referring to FIG. 5, when the main body 110 has a cylindrical shape, the power transmitting coil 150 may be disposed along the outer circumferential surface of the main body 110 at the side of the upper portion of the main body 110. In some examples, the power transmitting coil 150 may be in close contact with the outer circumferential surface of the main body 110 within a predetermined circular arc length. Accordingly, the power transmitting coil 150 may have a deformed elliptical shape such that a length of a major axis adjacent to the main body 110 is within a preset circular arc length.

When the main body 110 has a square pillar shape, the power transmitting coil 150 may be disposed along the outer surface of the main body 110 at the side of the upper portion of the main body 110. In other words, the power transmitting coil 150 may have a rectangular shape such that a horizontal length adjacent to the main body 110 is within a preset length and may also have an elliptical shape such that a length of a long axis adjacent to the main body 110 is within a preset circular arc length.

The power transmitting coil 150 may be electrically connected to the first power receiving coil 140a. As the power transmitting coil 150 is electrically connected to the first power receiving coil 140a, the current induced in the first power receiving coil 140a may flow through the power transmitting coil 150. Based on current flowing through the power transmitting coil 150, a magnetic field may be generated by the power transmitting coil 150.

In some examples, according to the present disclosure, the wireless induction heating cooker 100 may further include a first power conversion circuit 170 that transmits the current induced in the first power receiving coil 140a to the power transmitting coil 150.

Referring to FIGS. 2, 3, and 5, the first power conversion circuit 170 may be or include a packaged integrated circuit and may be provided at one side of the main body 110. In some examples, the first power conversion circuit 170 may be fixed to one side of the main body 110 below the power transmitting coil 150.

Referring to FIG. 6, an input terminal of the first power conversion circuit 170 may be connected to the first power receiving coil 140a, and an output terminal of the first power conversion circuit 170 may be connected to the power transmitting coil 150. Accordingly, the first power conversion circuit 170 may convert the current induced in the first power receiving coil 140a into stable alternating current (AC) and may provide the power transmitting coil 150 with the AC.

The amount of current induced in the first power receiving coil 140a may vary depending on the output of the heating coil 210 and a load amount of the inner pot 130 (e.g., moisture contained in the food and the amount of food). In some examples, the amount of current induced in the first power receiving coil 140a may vary depending on a degree of matching with respect to a relative position between the heating coil 210 and the wireless induction heating cooker 100.

In order to minimize changes in the amount of current, the first power conversion circuit 170 stores the current induced in the first power receiving coil 140a as a predetermined voltage, converts the stored voltage into a stable AC current, and provides the power transmitting coil 150 with the stable AC. Accordingly, the power transmitting coil 150 may receive the AC of a predetermined frequency to generate a magnetic field.

The second power receiving coil 140b is provided at one side of the lid 120 and may provide the at least one electronic device the current induced based on the magnetic field generated by the power transmitting coil 150.

Referring back to FIG. 3, the second power receiving coil 140b may be supported by any support member and fixedly disposed on one side of the lid 120. The second power receiving coil 140b may be in close contact with the side surface of the lid 120 to minimize the volume of the wireless induction heating cooker 100.

In some examples, the second power receiving coil 140b may have a plate shape like the power transmitting coil 150, and may be horizontal disposed at the side surface of the lid 120 to face the power transmitting coil 150. That is, the second power receiving coil 140b may vertically protrude from the side surface of the lid 120.

In one example, the second power receiving coil 140b may be disposed along the outer surface of the lid 120 at one side of the cap 120.

Referring back to FIG. 5, when the lid 120 has a cylindrical shape, the second power receiving coil 140b may be disposed along the outer circumferential surface of the lid 120 at one side of the lid 120. In some examples, the second power receiving coil 140b may be in close contact with the outer circumferential surface of the lid 120 within a preset circular arc length. Accordingly, the second power receiving coil 140b may have a deformed elliptical shape such that the length of the long axis adjacent to the lid 120 is within a preset circular arc length.

In some cases where the lid 120 has a square pillar shape, the second power receiving coil 140b may be disposed along the outer surface of the lid 120 at one side of the lid 120. In other words, the second power receiving coil 140b may have a rectangular shape such that a horizontal length adjacent to the lid 120 is within a preset length and may also have an elliptical shape such that the length of the long axis adjacent to the lid 1q20 is within the predetermined circular arc length.

In some examples, the second power receiving coil 140b may be provided at one side of the lid 120 at a position corresponding to the power transmitting coil 150.

Induced current may be generated by the second power receiving coil 140b based on a magnetic field generated by the power transmitting coil 150. In order to maximize the amount of current generated by the second power receiving coil 140b, the second power receiving coil 140b may be provided at a position corresponding to the position of the power transmitting coil 150. In some examples, the second power receiving coil 140b may face the power transmitting coil 150 at a position that is magnetically coupled to the power transmitting coil 150 with a maximum coupling factor.

In one example, the second power receiving coil 140b may be vertically overlapped with the power transmitting coil 150.

In some examples, the second power receiving coil 140b may be partially completely overlapped with the power transmitting coil 150. In other words, when the wireless induction heating cooker 100 is viewed from top, some or all of the second power receiving coil 140b may be included in an area formed by the power transmitting coil 150. However, in order for the second power receiving coil 140b and the power transmitting coil 150 to be magnetically coupled with the maximum coupling factor, all of the second power receiving coil 140b may be included in an area formed by the power transmitting coil 150.

Referring back to FIG. 5, the second power receiving coil 140b and the power transmitting coil 150 may have the same size and shape. In this case, the second power receiving coil 140b may be completely overlapped with the power transmitting coil 150 vertically. In other words, the second power receiving coil 140b and the power transmitting coil 150 have the same size and shape and may be spaced apart from each other by a predetermined vertical distance at a same horizontal position and may be provided in the lid 120 and the main body 110, respectively.

By contrast, the area of the second power receiving coil 140b may be less than the area of the power transmitting coil 150. In this case, the second power receiving coil 140b may be completely included in an area formed by the power transmitting coil 150 vertically. In some examples, as shown in FIG. 5, in some cases where the second power receiving coil 140b and the power transmitting coil 150 each have the deformed elliptical shape such that the center of the circular arc of the second power receiving coil 140b with respect to a major axis of the second power receiving coil 140b is the same as the power transmitting coil 150, a length of the major axis of the second power receiving coil 140b may be less than a length of a major axis of the power transmitting coil 150.

Due to the above-described structural features, the maximum amount of current may be induced in the second power receiving coil 140b and the second power receiving coil 140b may provide the induced current to the electronic device inside the lid 120.

Referring to FIG. 6, the second power receiving coil 140b may be electrically connected to a plurality of electronic devices inside the lid 120. Accordingly, the plurality of electronic devices may receive the induced current generated in the second power receiving coil 140b as a power source.

The plurality of electronic devices may operate based on a power supply provided by the second power receiving coil 140b. For example, the controller 121 controls the overall operation of the wireless induction heating cooker 100 (e.g., the steam discharge and blockage operation of the steam discharger 124) based on the power received from the second power receiving coil 140b. In some examples, the communicator 122 may perform data communication with the communicator 240 of the induction heating device based on the power received from the second power receiving coil 140b. In some examples, the display 123 may visually output state information related to the wireless induction heating cooker 100 based on the power received from the second power receiving coil 140b.

In some examples, according to the present disclosure, as shown in FIG. 6, the wireless induction heating cooker 100 may further include a second power conversion circuit that transmits the current induced in the second power receiving coil 140b to the electronic device of the plurality of electronic devices in the lid 120.

Referring to FIGS. 2 and 3, the second power conversion circuit 180 may be or include the packaged integrated circuit and may be provided in the lid 120. Referring back to FIG. 6, an input terminal of the second power conversion circuit 180 may be connected to the second power receiving coil 140b, and an output terminal of the second power conversion circuit 180 may be connected to each electron in the lid 120. Accordingly, the second power conversion circuit 180 may convert, into the stable DC voltage, the current induced in the second power receiving coil 140b and provide the same to each electronic device.

In some examples, AC may be induced in the second power receiving coil 140b. In some examples, each electronic device may receive the DC voltage having the predetermined magnitude according to specification as a power source and may be operated.

The second power conversion circuit 180 converts, into the DC voltage, the current induced in the second power receiving coil 140b and store, and boosts or drops the stored DC voltage to respectively output the DC voltage having the predetermined magnitude that meets the specification of each electronic device of the plurality of electronic devices and may output the generated DC voltage to each of electronic devices.

Accordingly, each electronic device (e.g., the controller 121, the communicator 122, and the display 123 described above) of the plurality of electronic devices may operate based on the DC voltage suitable for specification of each electronic device itself.

According to the present disclosure, the wireless induction heating cooker wirelessly receives the power from the induction heating device and performs the cooking operation to perform heating with respect to the food and every operation for user convenience without connection with an external power supply and the internal battery.

In some examples, referring back to FIG. 6, the wireless induction heating cooker 100 of the present disclosure may further include a battery 190 that stores current induced in the second power receiving coil 14.

The battery 190 may be provided in the lid 120 to store current induced in the second power receiving coil 140b as a reserve power. To this end, the second power conversion circuit 180 may charge the battery 190 by controlling the magnitude of the current induced in the second power receiving coil 140b.

The battery 190 may be electrically connected to each electronic device of the plurality of electronic devices inside the lid 120, and each electronic device of the plurality of electronic devices may operate by receiving power from the battery 190. In some examples, each electronic device of the plurality of electronic devices operates based on the DC voltage output from the second power conversion circuit 180, and based on the DC power being not output from the second power conversion circuit 180, each electronic device may operate by receiving the DC voltage from the battery 190.

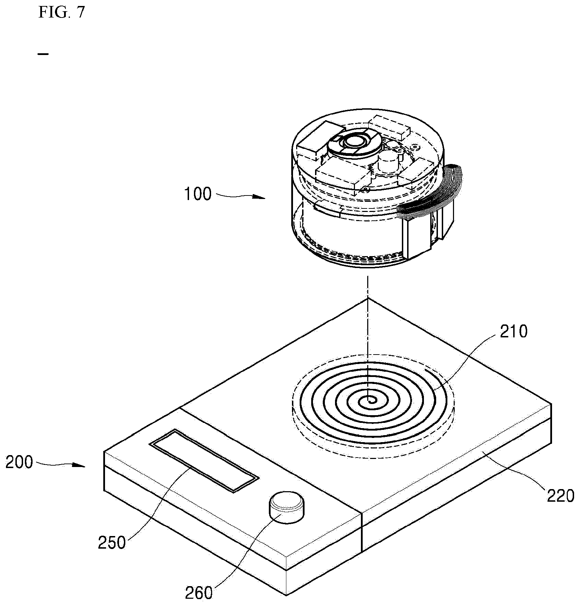

A wireless induction heating system according to an embodiment of the present disclosure is described in detail with reference to FIGS. 7 to 10.

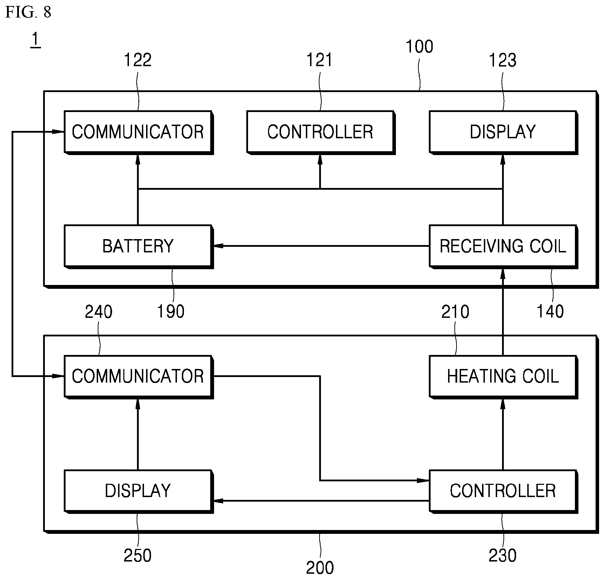

FIG. 7 shows an example wireless induction heating system. FIG. 8 shows the control flow of the wireless induction heating system shown in FIG. 7.

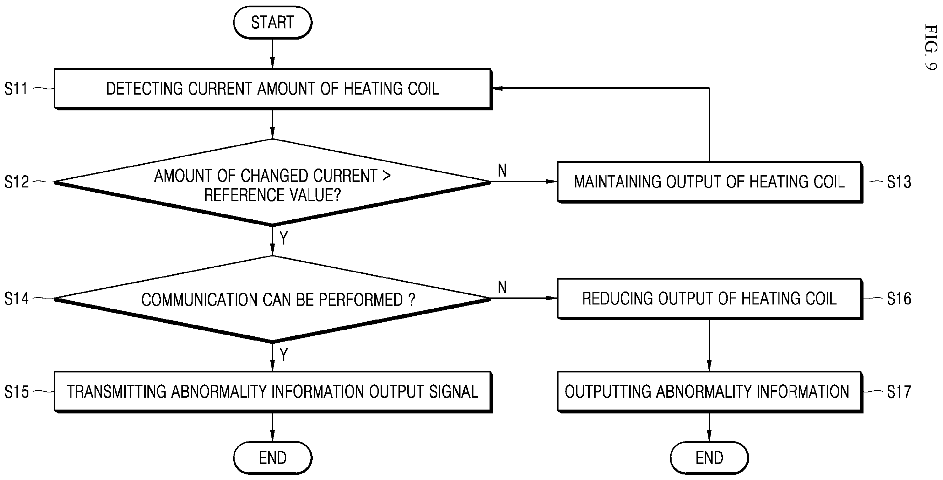

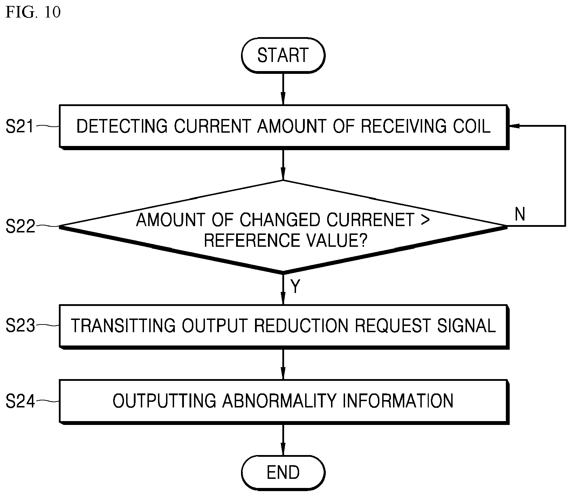

FIG. 9 is a flow chart showing operation of an induction heating device 200. FIG. 10 is a flow chart showing an operation process of the wireless induction heating cooker 100.

According to an embodiment of the present disclosure, referring to FIG. 7, the wireless induction heating system 1 may include an induction heating device 200 and a wireless induction heating cooker 100 that operates on the induction heating device 200. The induction heating device 200 and the wireless induction heating cooker 100 of the wireless induction heating system 1 are the same as those described with reference to FIGS. 2 to 6 and differences from the above description are mainly described below.

The induction heating device 200 may generate a magnetic field through the heating coil 210, and the wireless induction heating cooker 100 may be disposed in an area formed by the heating coil 210 and may be operated.

The area formed by the heating coil 210 may be a minimum area that may include all portions of the heating coil 210. For example, based on the heating coil 210 is a circular plate coil, the area of the region formed by the heating coil 210 may be a width of a circle determined based on the coil radius, which is a distance between the center of the heating coil 210 and the outer circumferential surface of the heating coil 210.

Referring to FIGS. 7 and 8, the induction heating device 200 may include a heating coil 210, a controller 230, a communicator 240, a display 250, and a knob switch 260. The induction heating device 200 shown in FIGS. 7 and 8 is according to one embodiment, and components of the induction heating device 200 are not limited to the examples shown in FIGS. 7 and 8, and some components of the induction heating device 200 may be added or may be changed or deleted as necessary.

The controller 230 may control the heating coil 210 and the display 250. In some examples, the controller 230 may control the output of the heating coil 210 and the display 250 may control to output the state information related to the induction heating device 200 and the abnormality information described below.

The knob switch 260 may be provided on the upper surface of the induction heating device 200 to provide a signal to the controller 230 based on a degree of rotation thereof. The controller 230 may determine the output of the heating coil 210 based on the signal received from the knob switch 260. In other words, the output of the heating coil 210 may be controlled based on the degree of rotation of the knob switch 260.

In some examples, the wireless induction heating cooker 100 may be included in the area formed by the heating coil 210 and may be operated. In some examples, the area formed by the bottom surface of the wireless induction heating cooker 100 may be included in the area formed by the heating coil 210.

The wireless induction heating cooker 100 may perform cooking operation based on the magnetic field generated by the heating coil 210. The cooking operation of the wireless induction heating cooker 100 may include the heating operation with respect to the food through the heating of the inner pot, as well as the overall operations of the above-mentioned controller 121, communicator 122, and display 123.

The induction heating device 200 and the wireless induction heating cooker 100 perform mutual data communication based on the displacement state of the wireless induction heating cooker 100 with respect to the induction heating device 200 to output abnormality information or to control the output of the heating coil 210.

The displacement state of the wireless induction heating cooker 100 may be divided into a normal displacement state and an abnormal displacement state.

In one example, based on the horizontal distance between the center vertical line of the heating coil 210 and the center vertical line of the wireless induction heating cooker 100 being within a predetermined distance, the displacement state of the wireless induction heating cooker 100 may be a normal displacement state. By contrast, based on the horizontal distance between the center vertical line of the heating coil 210 and the center vertical line of the wireless induction heating cooker 100 exceeding a preset distance, the displacement state of the wireless induction heating cooker 100 may be the abnormally disposed state

In another example, based on the area formed by the bottom surface of the wireless induction heating cooker 100 being entirely included in the area formed by the heating coil 210, the displacement state of the wireless induction heating cooker 100 may be a normal displacement state. By contrast, based on the area formed by the bottom surface of the wireless induction heating cooker 100 being not entirely included in the area formed by the heating coil 210, the displacement state of the wireless induction heating cooker 100 may be the abnormal displacement state.

The induction heating device 200 and the wireless induction heating cooker 100 perform data communication based on the displacement state of the wireless induction heating cooker 100 and at least one of the induction heating device 200 and the wireless induction heating cooker 100 may output abnormality information. In some examples, the induction heating device 200 may control the output of the heating coil 210 based on the displacement state described above.

The abnormality information may be any information indicating that the wireless induction heating cooker 100 is not properly disposed, and may be information visually or audibly output. For example, the abnormality information may include text and voice information to request the user to change the position of the wireless induction heating cooker 100.

The operation of the induction heating device 200 based on the displacement state of the wireless induction heating cooker 100 is described.

The induction heating device 200 may determine the displacement state of the wireless induction heating cooker 100 based on the amount of changed current of the heating coil 210.

Referring back to FIG. 8, the controller 230 may detect a current amount of the heating coil 210. Any current sensor or current detection circuit may be used for operation of detecting the current amount performed by the controller 230. The controller 230 may detect the amount of current of the heating coil 210 during a preset period of time and may calculate the amount of changed current between a previous period of time and a current period of time during every period of time.

A position of the wireless induction heating cooker 100, which has performed the cooking in the normal displacement state, may be changed based on various types of external factors and the displacement state of the wireless induction heating cooker 100 may be changed from the normal displacement state to the abnormal displacement state.

Based on the displacement state of the wireless induction heating cooker 100 being changed to the abnormal displacement state, as the matching degree of the heating coil 210 and the wireless induction heating cooker 100 is reduced, the amount of current of the heating coil 210 may also be reduced. Accordingly, the controller 230 may determine the displacement state of the wireless induction heating cooker 100 based on comparison of the amount of changed current of the heating coil 210 with the reference value.

In some examples, the controller 230 may determine the displacement state of the wireless induction heating cooker 100 as the normal displacement state based on the amount of changed current of the heating coil 210 being less than or equal to the reference value. By contrast, the controller 230 may determine the disposition state of the wireless induction heating cooker 100 as the abnormal displacement state based on the amount of changed current of the heating coil 210 being exceeding the reference value.

According to the present disclosure, the wireless induction heating system determines whether the wireless induction heating cooker is normally disposed on the induction heating device, to thereby determine the poor displacement state of the wireless induction heating cooker, which causes degradation in cooking performance, without the user's recognition.

The induction heating device 200 may maintain the output of the heating coil 210 based on the displacement state of the wireless induction heating cooker 100 being the normal displacement state. By contrast, based on the displacement state of the wireless induction heating cooker 100 being the abnormal displacement state, the output of the heating coil 210 may be reduced.

In some examples, based on the displacement state of the wireless induction heating cooker 100 being the normal displacement state, the controller 230 may not additionally control the heating coil 210. Accordingly, the output of the heating coil 210 may be maintained without change. By contrast, based on the displacement state of the wireless induction heating cooker 100 being the abnormal displacement state, the controller 230 controls an inverter of the induction heating device 200 to reduce the magnitude of the current supplied to the heating coil 210. Accordingly, the output of the heating coil 210 may be reduced.

In some examples, the induction heating device 200 determines the communication state with the wireless induction heating cooker 100 based on the displacement state of the wireless induction heating cooker 100 being the abnormal displacement state, and outputs abnormality information or may control the wireless induction heating cooker 100 to output the abnormality information based on the communication state thereof.

Referring back to FIG. 8, the wireless induction heating cooker 100 may perform data communication with the induction heating device 200 based on current induced due to a magnetic field generated by the heating coil 210.

In some examples, the wireless induction heating cooker 100 may include a receiving coil 140 in which the current is induced based on the magnetic field generated by the heating coil 210 and may operate the communicator 122 based on the current induced in the receiving coil 140. The receiver may be at least one of the first power receiving coil 140a and the second power receiving coil 140b described with reference to FIGS. 2 to 6.

Basically, as the communicator 122 of the wireless induction heating cooker 100 operates based on current induced in the receiving coil 140 as a power source, the communicator 122 may operate only based on the current induced in the receiving coil 140. Accordingly, the communicator 122 may perform data communication at a high communication rate based on the displacement state of the wireless induction heating cooker 100 being in the normal displacement state.

The communicator 240 of the induction heating device 200 may transmit a communication request signal to the communicator 122 of the wireless induction heating cooker 100 based on the displacement state of the wireless induction heating cooker 100 being the abnormal displacement state. The communicator 122 of the wireless induction heating cooker 100 may generate a communication response signal corresponding to the communication request signal and may transmit the generated communication response signal to the communicator 240 of the induction heating device 200.

Even when the displacement state of the wireless induction heating cooker 100 is the abnormal displacement state, based the communicator 122 being operated based on the current induced in the receiving coil 140, the communicator 122 may transmit the communication response signal to the communicator 240.

The induction heating device 200 may determine a communication state with the wireless induction heating cooker 100 based on whether the communication response signal is received. In some examples, the induction heating device 200 may determine the communication state as the normal state based on the communication response signal being received from the wireless induction heating cooker 100 and may determine the communication state as an unable state based on the communication response signal being not received from the induction heating cooker.

The induction heating device 200 may control the wireless induction heating cooker 100 to output the abnormality information based on the determination that communication state thereof is the normal state.

In some examples, based on the displacement state of the wireless induction heating cooker 100 being the abnormal displacement state and the communication state thereof being the normal state, the communicator 240 may transmit the abnormality information output request signal to the communicator 122. The controller 121 of the wireless induction heating cooker 100 may receive the abnormality information output request signal through the communicator 122 and may control the display 123 to visually output the abnormality information to the user based on the received signal.

In some examples, the induction heating device 200 may reduce the output of the heating coil 210 and may output the abnormality information based on the determination that the communication state thereof is the unable state.

In some examples, based on the displacement state of the wireless induction heating cooker 100 being the abnormal displacement state and the communication state being the unable state, as data communication is impossible, the communicator 240 may not transmit, to the communicator 122, the abnormality information output request signal. In this case, the controller 230 may reduce the output of the heating coil 210 by reducing the amount of current supplied to the heating coil 210, and may control the display 250 to visually output the abnormality information to the user.

According to the present disclosure, the wireless induction heating system may notify users of the abnormally disposed wireless induction heating cooker and induction heating device to induce the user to properly dispose the wireless induction heating cooker on the induction heating device and to prevent the degradation in the rice-cooking performance caused by the poor displacement of the wireless induction heating cooker.

The operation of the wireless induction heating cooker 100 determined based on the displacement state of the wireless induction heating cooker 100 is described below.

The wireless induction heating cooker 100 may determine the displacement state of the wireless induction heating cooker 100 based on the amount of changed current of the receiving coil 140.

Referring back to FIG. 8, the controller 121 may detect the current amount of the receiving coil 140. Any current sensor or current detection circuit may be used for the current amount detection operation of the controller 121. The controller 121 may detect the amount of current of the receiving coil 140 during a preset period of time and calculate the amount of changed current between the previous period of time and the current period of time during every period of time.

Based on changes of the displacement state of the wireless induction heating cooker 100 from the normal displacement state to the abnormal displacement state, the degree of matching between the heating coil 210 and the receiving coil 140 is reduced, and the amount of current in the receiving coil 140 may also be reduced. Accordingly, the controller 121 may determine the displacement state of the wireless induction heating cooker 100 by comparing the amount of changed current of the receiving coil 140 with a reference value.

In some examples, the controller 121 may determine the displacement state of the wireless induction heating cooker 100 as the normal displacement state based on the amount of changed current of the receiving coil 140 being less than or equal to the reference value. By contrast, the controller 121 may determine the displacement state of the wireless induction heating cooker 100 as the abnormal displacement state based on the amount of changed current of the receiving coil 140 being exceeding the reference value.

Based on the determination that the displacement state of the wireless induction heating cooker 100 is the abnormal displacement state, the controller 121 may basically control the display 123 to visually output the abnormal signal to the user.

In some examples, the wireless induction heating cooker 100 may transmit an output reduction request signal to the induction heating device 200 based on the determination that the displacement state of the wireless induction heating cooker 100 is the abnormal displacement state. The induction heating device 200 may reduce the output of the heating coil 210 based on the output reduction request signal.

In some examples, based on the displacement state of the wireless induction heating cooker 100 being the abnormal displacement state, the communicator 122 may transmit an output reduction request signal to the communicator 240 of the induction heating device 200.

Based on the communicator 122 operating based on the current induced in the receiving coil 140 as a power source and the displacement state of the wireless induction heating cooker 100 being the abnormal displacement state and the communication state thereof being the unable sate, the output reduction request signal may not be transmitted to the communicator 240.

By contrast, based on the displacement state of the wireless induction heating cooker 100 being the abnormal displacement state and the communication state thereof being the normal state, the output reduction request signal may be transmitted to the communicator 240. The controller 230 may receive the output reduction request signal through the communicator 240 and may reduce the current amount supplied to the heating coil 210 based on the received signal to reduce the output of the

In some examples, the communicator 122 of the wireless induction heating cooker 100 may receive the power from the internal battery 190 in order for the output reduction request signal to be transmitted to the induction heating device 200 even when the displacement state of the wireless induction heating cooker 100 is the abnormal displacement state and the communication state thereof is the unable state.

Referring back to FIG. 8, the wireless induction heating cooker 100 may further include a battery 190. The battery 190 may be a non-rechargeable battery that supplies a predetermined voltage or a rechargeable battery that stores the current induced in the receiving coil 140 as the reserve power.

The battery 190 may supply a predetermined voltage to the communicator 122 regardless of whether the current is induced in the receiving coil 140. Accordingly, the wireless induction heating cooker 100 may transmit an output reduction request signal to the induction heating device 200 through the communicator 122 that receives the power from the battery 190.

In this case, the output of the heating coil 210 may be reduced in all cases where the displacement state of the wireless induction heating cooker 100 is the abnormal displacement state.

An operation process of the induction heating device 200 and the wireless induction heating cooker 100 according to an embodiment is described below in detail with reference to FIGS. 9 and 10.

Referring to FIG. 9, the induction heating device 200 may detect an amount of current of the heating coil 210 (S11) and may calculate an amount of changed current between the previous period of time and the current period of time, and may compare the calculated amount of changed current with the reference value (S12).

Based on the amount of changed current being within the reference value, the induction heating device 200 may maintain the output of the heating coil 210 by maintaining the amount of current supplied to the heating coil 210 (S 13).

By contrast, based on the amount of changed current being exceeding the reference value, the induction heating device 200 may determine whether the communication with the wireless induction heating cooker 100 can be performed (S14).

Based on the determination that the communication may be performed (i.e. in a normal state), the induction heating device 200 may transmit the abnormality information output signal to the wireless induction heating cooker 100 (S15).

Determining whether communication may be performed (i.e. in a communication state) through a process of transmitting the communication request signal and receiving the communication response signal, and the process of operating the wireless induction heating cooker 100 based on the abnormality information output signal have been described above. The details thereof are omitted.

By contrast, based on the determination that communication cannot be performed (i.e., in the unable state), the induction heating device may reduce the output of the heating coil 210 by reducing the amount of current supplied to the heating coil 210 (S16).

Subsequently, the induction heating device may visually output the abnormality information to the user through the internal display 250 (S17). In some examples, the sequence of S16 and S17 may be reversed.

Referring to FIG. 10, the wireless induction heating cooker 100 may detect a current amount of the receiving coil 140 (S21), may calculate the amount of changed current of the receiving coil 140 between the previous period of time and the current period of time and may compare the calculated amount of changed current with the reference value (S22).

Based on the amount of changed current being within the reference value, the operation of S21 and S22 may be continually and repeatedly performed, and based on the amount of changed current being exceeding the reference value, an output reduction request signal may be transmitted to the induction heating device 200 (S23).

As the process of operating the induction heating device 200 based on the output reduction request signal is described above and details thereof are omitted.

After the output reduction request signal is transmitted, the wireless induction heating cooker 100 may visually output the abnormality information to the user through the internal display 123 (S24). In some examples, the sequence of S23 and S24 may be reversed.

According to the present disclosure, the wireless induction heating system may control the amount of transferred heat with respect to the wireless induction heating cooker based on the mutual displacement between the wireless induction heating cooker and the induction heating device to prevent the safety problem occurring due to the poor displacement of the wireless induction heating cooker.

## Claims

1. A wireless induction heating cooker (100), the wireless induction heating cooker (100) being operable on an induction heating device (200), the wireless induction heating cooker (100) comprising:
a main body (110) having an opened upper surface of the main body (110);
a lid (120) fastened to an upper surface of the main body (110);
an inner pot (130) accommodated in the main body (110) and heatable based on a first magnetic field that can be generated by a heating coil (210) of the induction heating device (200);
a first power receiving coil (140a) disposed on a bottom surface of the main body (110) and in which current can be induced based on the magnetic field generated by the heating coil (210);
a power transmitting coil (150) provided at one side of an upper portion of the main body (110) and configured to receive the current induced in the first power receiving coil (140a) and to generate a second magnetic field;
a second power receiving coil (140b) provided at one side of the lid (120) and configured to supply the induced current based on the second magnetic field generated by the power transmitting coil (150) to at least one electronic device of a plurality of electronic devices;
a controller (121) configured to determine a displacement state of the wireless induction heating cooker (100) based on an amount of changed current of at least one of the first power receiving coil (140a) and the second power receiving coil (140b); and
a communicator (122) configured to perform data communication with the induction heating device (200) in consideration of the displacement state of the wireless induction heating cooker (100),
wherein inner pot (130) includes a plate area (FA) parallel to the heating coil (210) and an edge area (RA) connecting the plate area (FA) and a side surface of the inner pot (130), and
wherein the first power receiving coil (140a) is disposed below the edge area (RA).

2. The wireless induction heating cooker (100) of claim 1, wherein each of the controller (121) and the communicator (122) is configured to operate based on the current induced in the second power receiving coil (140b).

3. The wireless induction heating cooker (100) of claim 1 or 2, wherein the controller (121) is configured to control the display (123) to visually output abnormality information based on the determination that the displacement state of the wireless induction heating cooker (100) is an abnormal displacement state.

4. The wireless induction heating cooker (100) of any one of claims 1 to 3, wherein the communicator (122) is configured to transmit an output reduction request signal to the induction heating device (200) based on the determination that the displacement state of the wireless induction heating cooker (100) is an abnormal displacement state.

5. The wireless induction heating cooker (100) of claim 4, wherein the communicator (122) is configured to transmit the output reduction request signal based on the current induced in the second power receiving coil (140b) or to transmit the output reduction request signal based on power supplied by an internal battery (190).

6. The wireless induction heating cooker (100) of any one of claims 1 to 5,
wherein the communicator (122) is configured to receive an abnormality information output request signal from the induction heating device (200) based on the determination that the displacement state of the wireless induction heating cooker (100) is an abnormal displacement state, and
wherein the controller (121) is configured to control a display (123) to visually output abnormality information based on the abnormality information output request signal.

7. A wireless induction heating system, comprising:
an induction heating device (200) comprising a heating coil (210) configured to generate a magnetic field; and
a wireless induction heating cooker (100) according to any one of claims 1 to 6, disposed in an area defined by the heating coil (210) and configured to perform cooking operation based on the magnetic field generated by the heating coil (210) and
wherein each of the induction heating device (200) and the wireless induction heating cooker (100) is configured to output abnormality information related to an abnormal position of the wireless induction heating cooker (100) or to control output of the heating coil (210) by performing mutual data communication.

8. The wireless induction heating system of claim 7, wherein the induction heating device (200) is configured to determine a displacement state of the wireless induction heating cooker (100) based on an amount of changed current of the heating coil (210).

9. The wireless induction heating system of claim 8, wherein the induction heating device (200) is configured to maintain the output of the heating coil (210) based on the displacement state of the wireless induction heating cooker (100) being a normal displacement state and reduce the output of the heating coil (210) based on the displacement state of the wireless induction heating cooker (100) being an abnormal displacement state.

10. The wireless induction heating system of any one of claims 7 to 9, wherein the wireless induction heating cooker (100) is configured to perform the data communication with the induction heating device (200) based on current induced due to the magnetic field generated by the heating coil (210).

11. The wireless induction heating system of any one of claims 7 to 10, wherein the induction heating device (200) is configured to determine a communication state with the wireless induction heating cooker (100) based on a displacement state with the wireless induction heating cooker (100) being an abnormal displacement state and to output the abnormality information and to control the wireless induction heating cooker (100) to output the abnormal information based on the communication state with the wireless induction heating cooker (100).

12. The wireless induction heating system of claim 11, wherein, based on the communication state between the wireless heating device (200) and the wireless induction heating cooker (100) being a normal state, the wireless induction heating cooker (100) is configured to control to output the abnormality information, and based on the communication state between the wireless heating device (200) and the wireless induction heating cooker (100) being an unable state, the induction heating device (200) is configured to reduce the output of the heating coil (210) and to output the abnormality information.

13. The wireless induction heating system of any one of claims 7 to 12, wherein the wireless induction heating cooker (100) comprises a receiving coil (140) in which current is induced based on the magnetic field generated by the heating coil (210) and is configured to determine a displacement state of the wireless induction heating cooker (100) based on an amount of changed current of the receiving coil (140).

14. The wireless induction heating system of claim 12, wherein the wireless induction heating cooker (100) is configured to output an abnormal signal based on the displacement state of the wireless induction heating cooker (100) being an abnormal displacement state.

15. The wireless induction heating system of claim 12 or 13,
wherein the wireless induction heating cooker (100) is configured to transmit an output reduction request signal to the induction heating device (200) based on the displacement state of the wireless induction heating cooker (100) being an abnormal displacement state and
wherein the induction heating device (200) is configured to reduce the output of the heating coil (210) based on the output reduction request signal.

## Patentansprüche

1. Drahtloser Induktionskocher (100), wobei der drahtlose Induktionskocher (100) auf einer Induktionsheizvorrichtung (200) betreibbar ist und der drahtlose Induktionskocher (100) aufweist:
einen Hauptkörper (110) mit einer geöffneten oberen Oberfläche des Hauptkörpers (110);
einen Deckel (120), der an einer oberen Oberfläche des Hauptkörpers (110) angebracht ist;
einen Innentopf (130), der in dem Hauptkörper (110) untergebracht ist und auf Basis eines ersten Magnetfelds, das von einer Heizspule (210) der Induktionsheizvorrichtung (200) erzeugt werden kann, erwärmbar ist;
eine erste energieempfangende Spule (140a), die an einer unteren Oberfläche des Hauptkörpers (110) angeordnet ist und in welcher Strom auf Basis des von der Heizspule (210) erzeugten Magnetfelds induziert werden kann;
eine energieübertragende Spule (150), die an einer Seite eines oberen Abschnitts des Hauptkörpers (110) bereitgestellt ist und konfiguriert ist, um den in der ersten energieempfangenden Spule (140a) induzierten Strom zu empfangen und ein zweites Magnetfeld zu erzeugen;
eine zweite energieempfangende Spule (140b), die an einer Seite des Deckels (120) bereitgestellt ist und konfiguriert ist, um den induzierten Strom auf Basis des von der energieübertragenden Spule (150) erzeugten zweiten Magnetfelds zu mindestens einer elektronischen Vorrichtung von mehreren elektronischen Vorrichtungen zuzuführen;
eine Steuerung (121), die konfiguriert ist, um auf Basis einer geänderten Strommenge der ersten energieempfangenden Spule (140a) und/oder der zweiten energieempfangenden Spule (140b) einen Verschiebungszustand des drahtlosen Induktionskochers (100) zu bestimmen; und
einen Kommunikator (122), der konfiguriert ist, um im Hinblick auf den Verschiebungszustand des drahtlosen Induktionskochers (100) eine Datenkommunikation mit der Induktionsheizvorrichtung (200) durchzuführen,
wobei der Innentopf (130) einen Plattenbereich (FA) parallel zur Heizspule (210) und einen Randbereich (RA) aufweist, der den Plattenbereich (FA) und eine Seitenfläche des Innentopfes (130) verbindet, und
wobei die erste energieempfangende Spule (140a) unterhalb des Randbereichs (RA) angeordnet ist.

2. Drahtloser Induktionskocher (100) nach Anspruch 1, wobei sowohl die Steuerung (121) als auch der Kommunikator (122) konfiguriert ist, um auf Basis des in der zweiten energieempfangenden Spule (140b) induzierten Stroms betrieben zu werden.

3. Drahtloser Induktionskocher (100) nach Anspruch 1 oder 2, wobei die Steuerung (121) konfiguriert ist, um die Anzeige (123) zu steuern, um auf Basis der Bestimmung, dass der Verschiebungszustand des drahtlosen Induktionskochers (100) ein nichtnormaler Verschiebungszustand ist, Nichtnormalitätsinformation visuell auszugeben.

4. Drahtloser Induktionskocher (100) nach einem der Ansprüche 1 bis 3, wobei der Kommunikator (122) konfiguriert ist, um auf Basis der Bestimmung, dass der Verschiebungszustand des drahtlosen Induktionskochers (100) ein nichtnormaler Verschiebungszustand ist, ein Leistungsabgabereduktion-Anfragesignal zu der Induktionsheizvorrichtung (200) zu senden.

5. Drahtloser Induktionskocher (100) nach Anspruch 4, wobei der Kommunikator (122) konfiguriert ist, um das Leistungsabgabereduktion-Anfragesignal auf Basis des in der zweiten energieempfangenden Spule (140b) induzierten Stroms zu senden oder das Leistungsabgabereduktion-Anfragesignal auf Basis der von einer internen Batterie (190) zugeführten Energie zu senden.

6. Drahtloser Induktionskocher (100) nach einem der Ansprüche 1 bis 5,
wobei der Kommunikator (122) konfiguriert ist, um auf Basis der Bestimmung, dass der Verschiebungszustand des drahtlosen Induktionskochers (100) ein nichtnormaler Verschiebungszustand ist, ein Nichtnormalitätsinformationsausgabe-Anfragesignal von der Induktionsheizvorrichtung (200) zu empfangen, und
wobei die Steuerung (121) konfiguriert ist, um eine Anzeige (123) zu steuern, um auf Basis des Nichtnormalitätsinformationsausgabe-Anfragesignals eine Nichtnormalitätsinformation visuell auszugeben.

7. Drahtloses Induktionsheizsystem, aufweisend:
eine Induktionsheizvorrichtung (200), die eine Heizspule (210) aufweist, die konfiguriert ist, um ein Magnetfeld zu erzeugen; und
einen drahtlosen Induktionskocher (100) nach einem der Ansprüche 1 bis 6, der in einer von der Heizspule (210) definierten Zone angeordnet ist und konfiguriert ist, um auf Basis des von der Heizspule (210) erzeugten Magnetfelds einen Kochbetrieb durchzuführen, und
wobei sowohl die Induktionsheizvorrichtung (200) als auch der drahtlose Induktionskocher (100) konfiguriert ist, um durch wechselseitige Datenkommunikation eine Nichtnormalitätsinformation, die sich auf eine nichtnormale Position des drahtlosen Induktionskochers (100) bezieht, auszugeben oder eine Leistungsabgabe der Heizspule (210) zu steuern.

8. Drahtloses Induktionsheizsystem nach Anspruch 7, wobei die Induktionsheizvorrichtung (200) konfiguriert ist, um auf Basis einer geänderten Strommenge der Heizspule (210) einen Verschiebungszustand des drahtlosen Induktionskochers (100) zu bestimmen.

9. Drahtloses Induktionsheizsystem nach Anspruch 8, wobei die Induktionsheizvorrichtung (200) konfiguriert ist, um auf Basis dessen, dass der Verschiebungszustand des drahtlosen Induktionskochers (100) ein normaler Verschiebungszustand ist, die Leistungsabgabe der Heizspule (210) beizubehalten, und auf Basis dessen, dass der Verschiebungszustand des drahtlosen Induktionskochers (100) ein nichtnormaler Verschiebungszustand ist, die Leistungsabgabe der Heizspule (210) zu reduzieren.

10. Drahtloses Induktionsheizsystem nach einem der Ansprüche 7 bis 9, wobei der drahtlose Induktionskocher (100) konfiguriert ist, um auf Basis eines Stroms, der aufgrund des von der Heizspule (210) erzeugten Magnetfelds induziert ist, die Datenkommunikation mit der Induktionsheizvorrichtung (200) durchzuführen.

11. Drahtloses Induktionsheizsystem nach einem der Ansprüche 7 bis 10, wobei die Induktionsheizvorrichtung (200) konfiguriert ist, um auf Basis eines Verschiebungszustands, in dem der drahtlose Induktionskocher (100) in einem nichtnormalen Verschiebungszustand ist, einen Kommunikationszustand mit dem drahtlosen Induktionskocher (100) zu bestimmen und die Nichtnormalitätsinformation auszugeben und auf Basis des Kommunikationszustands mit dem drahtlosen Induktionskocher (100) den drahtlosen Induktionskocher (100) zu steuern, um die Nichtnormalitätsinformation auszugeben.

12. Drahtloses Induktionsheizsystem nach Anspruch 11, wobei auf Basis dessen, dass der Kommunikationszustand zwischen der drahtlosen Heizvorrichtung (200) und dem drahtlosen Induktionskocher (100) ein normaler Zustand ist, der drahtlose Induktionskocher (100) konfiguriert ist, zu steuern, um die Nichtnormalitätsinformation auszugeben, und wobei auf Basis dessen, dass der Kommunikationszustand zwischen der drahtlosen Heizvorrichtung (200) und dem drahtlosen Induktionskocher (100) ein nichtfähiger Zustand ist, die Induktionsheizvorrichtung (200) konfiguriert ist, um die Leistungsabgabe der Heizspule (210) zu reduzieren und die Nichtnormalitätsinformation auszugeben.

13. Drahtloses Induktionsheizsystem nach einem der Ansprüche 7 bis 12, wobei der drahtlose Induktionskocher (100) eine empfangende Spule (140) aufweist, in welcher auf Basis des von der Heizspule (210) erzeugten Magnetfelds Strom induziert wird, und konfiguriert ist, um auf Basis einer geänderten Strommenge der empfangenden Spule (140) einen Verschiebungszustand des drahtlosen Induktionskochers (100) zu bestimmen.

14. Drahtloses Induktionsheizsystem nach Anspruch 12, wobei der drahtlose Induktionskocher (100) konfiguriert ist, um auf Basis dessen, dass der Verschiebungszustand des drahtlosen Induktionskochers (100) ein nichtnormaler Verschiebungszustand ist, ein Nichtnormal-Signal auszugeben.

15. Drahtloses Induktionsheizsystem nach Anspruch 12 oder 13,
wobei der drahtlose Induktionskocher (100) konfiguriert ist, um auf Basis dessen, dass der Verschiebungszustand des drahtlosen Induktionskochers (100) ein nichtnormaler Verschiebungszustand ist, ein Leistungsabgabereduktion-Anfragesignal zu der Induktionsheizvorrichtung (200) zu senden, und wobei die Induktionsheizvorrichtung (200) konfiguriert ist, um auf Basis des Leistungsabgabereduktion-Anfragesignals die Leistungsabgabe der Heizspule (210) zu reduzieren.

## Revendications

1. Appareil de cuisson à chauffage par induction sans fil (100), l'appareil de cuisson à chauffage par induction sans fil (100) pouvant fonctionner sur un dispositif de chauffage à induction (200), l'appareil de cuisson à chauffage par induction sans fil (100) comprenant :
un corps principal (110) ayant une surface supérieure ouverte du corps principal (110) ;
un capot (120) fixé sur une surface supérieure du corps principal (110) ;
une cuve interne (130) logée dans le corps principal (110) et qui peut être chauffée sur la base d'un premier champ magnétique qui peut être généré par une bobine de chauffage (210) du dispositif de chauffage à induction (200) ;
une première bobine de réception d'énergie (140a) disposée sur une surface inférieure du corps principal (110) et dans laquelle un courant peut être induit sur la base du champ magnétique généré par la bobine de chauffage (210) ;
une bobine de transmission d'énergie (150) prévue sur un côté d'une partie supérieure du corps principal (110) et configurée pour recevoir le courant induit dans la première bobine de réception d'énergie (140a) et pour générer un second champ magnétique ;
une seconde bobine de réception d'énergie (140b) prévue sur un côté du capot (120) et configurée pour fournir le courant induit sur la base du second champ magnétique généré par la bobine de transmission d'énergie (150) à au moins un dispositif électronique d'une pluralité de dispositifs électroniques ;
un contrôleur (121) configuré pour déterminer un état de déplacement de l'appareil de cuisson à chauffage par induction sans fil (100) sur la base d'une quantité de courant modifié d'au moins l'une de la première bobine de réception d'énergie (140a) et de la seconde bobine de réception d'énergie (140b) ; et
un communicateur (122) configuré pour effectuer une communication de données avec le dispositif de chauffage à induction (200) en tenant compte de l'état de déplacement de l'appareil de cuisson à chauffage par induction sans fil (100),
dans lequel la cuve interne (130) comprend une zone de plaque (FA) parallèle à la bobine de chauffage (210) et une zone de bord (RA) reliant la zone de plaque (FA) et une surface latérale de la cuve interne (130), et
dans lequel la première bobine de réception d'énergie (140a) est disposée en dessous de la zone de bord (RA).

2. Appareil de cuisson à chauffage par induction sans fil (100) selon la revendication 1, dans lequel chacun du contrôleur (121) et du communicateur (122) est configuré pour fonctionner sur la base du courant induit dans la seconde bobine de réception d'énergie (140b).

3. Appareil de cuisson à chauffage par induction sans fil (100) selon la revendication 1 ou 2, dans lequel le contrôleur (121) est configuré pour contrôler l'écran (123) afin d'indiquer visuellement des informations d'anomalie sur la base de la détermination que l'état de déplacement de l'appareil de cuisson à chauffage par induction sans fil (100) est un état de déplacement anormal.

4. Appareil de cuisson à chauffage par induction sans fil (100) selon l'une quelconque des revendications 1 à 3,
dans lequel le communicateur (122) est configuré pour transmettre un signal de sortie de demande de réduction au dispositif de chauffage par induction (200) sur la base de la détermination que l'état de déplacement de l'appareil de cuisson à chauffage par induction sans fil (100) est un état de déplacement anormal.

5. Appareil de cuisson à chauffage par induction sans fil (100) selon la revendication 4, dans lequel le communicateur (122) est configuré pour transmettre le signal de sortie de demande de réduction sur la base du courant induit dans la seconde bobine de réception d'énergie (140b) ou pour transmettre le signal de demande de sortie de réduction sur la base de l'énergie fournie par une batterie interne (190).

6. Appareil de cuisson à chauffage par induction sans fil (100) selon l'une quelconque des revendications 1 à 5,
dans lequel le communicateur (122) est configuré pour recevoir un signal de demande de délivrance d'informations d'anomalie de la part du dispositif de chauffage par induction (200) sur la base de la détermination que l'état de déplacement de l'appareil de cuisson à chauffage par induction sans fil (100) est un état de déplacement anormal, et
dans lequel le contrôleur (121) est configuré pour contrôler un écran (123) afin d'indiquer visuellement des informations d'anomalie sur la base du signal de demande de délivrance d'informations d'anomalie.

7. Système de chauffage à induction sans fil, comprenant :
un dispositif de chauffage à induction (200) comprenant une bobine de chauffage (210) configurée pour générer un champ magnétique ; et
un appareil de cuisson à chauffage par induction sans fil (100) selon l'une quelconque des revendications 1 à 6, disposé dans une zone définie par la bobine de chauffage (210) et configuré pour effectuer une opération de cuisson sur la base du champ magnétique généré par la bobine de chauffage (210), et
dans lequel chacun du dispositif de chauffage à induction (200) et de l'appareil de cuisson à chauffage par induction sans fil (100) est configuré pour délivrer des informations d'anomalie relatives à une position anormale de l'appareil de cuisson à chauffage par induction sans fil (100) ou pour contrôler la sortie de la bobine de chauffage (210) en effectuant une communication de données mutuelle.

8. Système de chauffage à induction sans fil selon la revendication 7, dans lequel le dispositif de chauffage à induction (200) est configuré pour déterminer un état de déplacement de l'appareil de cuisson à chauffage par induction sans fil (100) sur la base d'une quantité de courant modifié de la bobine de chauffage (210).

9. Système de chauffage à induction sans fil selon la revendication 8, dans lequel le dispositif de chauffage à induction (200) est configuré pour maintenir la sortie de la bobine de chauffage (210) sur la base de l'état de déplacement de l'appareil de cuisson à chauffage par induction sans fil (100) qui est un état de déplacement normal et pour réduire la sortie de la bobine de chauffage (210) sur la base de l'état de déplacement de l'appareil de cuisson à chauffage par induction sans fil (100) qui est un état de déplacement anormal.

10. Système de chauffage à induction sans fil selon l'une quelconque des revendications 7 à 9, dans lequel l'appareil de cuisson à chauffage par induction sans fil (100) est configurée pour effectuer la communication de données avec le dispositif de chauffage à induction (200) sur la base du courant induit dû au champ magnétique généré par la bobine de chauffage (210).

11. Système de chauffage à induction sans fil selon l'une quelconque des revendications 7 à 10, dans lequel le dispositif de chauffage à induction (200) est configuré pour déterminer un état de communication avec l'appareil de cuisson à chauffage par induction sans fil (100) sur la base d'un état de déplacement avec l'appareil de cuisson à chauffage par induction sans fil (100) qui est un état de déplacement anormal et pour délivrer les informations d'anomalie et pour contrôler l'appareil de cuisson à chauffage par induction sans fil (100) afin de délivrer les informations d'anomalie sur la base de l'état de communication avec l'appareil de cuisson à chauffage par induction sans fil (100).

12. Système de chauffage à induction sans fil selon la revendication 11, dans lequel, sur la base de l'état de communication entre le dispositif de chauffage sans fil (200) et l'appareil de cuisson à chauffage par induction sans fil (100) qui est un état normal, l'appareil de cuisson à chauffage par induction sans fil (100) est configurée pour délivrer les informations d'anomalie, et, sur la base de l'état de communication entre le dispositif de chauffage sans fil (200) et l'appareil de cuisson à chauffage par induction sans fil (100) qui est un état inapte, le dispositif de chauffage à induction (200) est configuré pour réduire la sortie de la bobine de chauffage (210) et pour délivrer les informations d'anomalie.

13. Système de chauffage à induction sans fil selon l'une quelconque des revendications 7 à 12, dans lequel l'appareil de cuisson à chauffage par induction sans fil (100) comprend une bobine de réception (140) dans laquelle un courant est induit sur la base du champ magnétique généré par la bobine de chauffage (210) et est configurée pour déterminer un état de déplacement de l'appareil de cuisson à chauffage par induction sans fil (100) sur la base d'une quantité de courant modifié de la bobine de réception (140).

14. Système de chauffage à induction sans fil selon la revendication 12, dans lequel l'appareil de cuisson à chauffage par induction sans fil (100) est configurée pour délivrer un signal d'anomalie sur la base de l'état de déplacement de l'appareil de cuisson à chauffage par induction sans fil (100) qui est un état de déplacement anormal.

15. Système de chauffage à induction sans fil selon la revendication 12 ou 13, dans lequel l'appareil de cuisson à chauffage par induction sans fil (100) est configurée pour transmettre un signal de demande de sortie de réduction au dispositif de chauffage à induction (200) sur la base de l'état de déplacement de l'appareil de cuisson à chauffage par induction sans fil (100) qui est un état de déplacement anormal, et
dans lequel le dispositif de chauffage à induction (200) est configuré pour réduire la sortie de la bobine de chauffage (210) sur la base du signal de sortie de demande de réduction.
